# EUROPEAN PATENT APPLICATION

(11) **EP 2 395 427 A1**
(43) Date of publication of application: **14.12.2011**
(21) Application number: 10305607.3
(22) Date of filing: 08.06.2010
(51) Int. Cl.: G06F 9/445, G06F 9/46

(54) **Method for connecting to a remote server from a browser enabled with a browser's extension on a host device**

(71) Applicant: Gemalto SA, 92190 Meudon (FR)
(72) Inventor: Faher, Mourad, 92197 MEUDON CEDEX (FR); Seif, Jacques, 92197 MEUDON CEDEX (FR)

(57) **Abstract**

A method for connecting to a remote server from a browser enabled with a browser's extension on a host device, wherein upon connection of a data processing device with a data processing device reader linked to the host device, the browser's extension receives data contained in a targeted file stored in said data processing device, said data being able to be interpreted by the browser so as to trigger a connection to the remote server and to display a subscribed service portal, said data being sent by the data processing device upon execution of a command transmitted by the browser's extension.

## Description

### FIELD OF THE INVENTION

The invention relates to the field of mobile telecommunications.

The invention particularly concerns a method for connecting to a remote server from a browser enabled with a browser's extension or a plug-in on a host device.

### BACKGROUND OF THE INVENTION

Currently, only USB devices have an autorun function by supplying their own driver or by auto-installing applications on their host machine.

The Near Field Communication devices or NFC-enabled contactless card can also provide data upon coupling with the reader. The data are intended to trigger the connection to a remote server or to a web portal. These data may be bookmark(s) read by a NFC-reader and input to a plug-in running on the interface device, such as for example a TV-monitor equipped with a specific antenna. Once the plug-in sends an http request and receives an http response, it displays it on the monitor, showing spontaneously to the user the portal with the appropriate menu.

Nevertheless such autorun functionalities need the use of a USB token, or the need to employ a NFC-enabled card with an adapted reader.

### SUMMARY OF THE INVENTION

It is an object of the invention to provide a method for automatically access to a remote service, for example by having a default web portal, just upon connection of a card with a card reader, for example just upon insertion of a card in a card reader for a contact card or just upon coupling a card to a card reader for a contactless card.

Thereto, the present invention provides a method for connecting to a remote server from a browser enabled with a browser's extension on a host device wherein upon connection of the data processing device with a data processing device reader linked to the host device, the browser's extension receives data contained in a targeted file stored in said data processing device, said data being able to be interpreted by the browser so as to trigger a connection to the remote server and to display a subscribed service portal, said data being sent by the data processing device upon execution of a command transmitted by the browser's extension.

According to other aspects of the invention:
- the method may comprise a step wherein the browser's extension reads and parses an Answer To Reset or Answer to Select (ATS) content received from said data processing device so as to detect the command for retrieving the targeted file;
- the browser's extension may read and parse a content out of an EF.ATR file received from said data processing device so as to detect the command for retrieving the targeted file;
- the parsed content may comprise an initial access data as specified in ISO/IEC 7816-4, said initial access data comprising data indicating said command;
- the browser's extension may transmit the command to the data processing device reader which in turn executes the command so as the data processing device sends the contents of the targeted file in return;
- it may comprises using an APDU command;
- the data processing device reader may execute forcibly the ADPU command extracted from the ATR before any other transaction;
- it may comprise using a smart card as data processing device;
- it may comprise using an elementary file comprising XML formatted data as targeted file;
- it may comprise using an elementary file comprising a bookmark as targeted file;
- the browser's extension may receive instructions for updating the data of the targeted file when the connection to the remote server is established;
- the update of the data of the targeted file may depend on security conditions;
- it may use contact card;
- it may use contactless card.

Thanks to this method, a user can subscribe to a service accessible through a specific web portal, and can get automatically connected to the web portal upon insertion.

The invention is now described, by way of example, with reference to the accompanying drawings. The specific nature of the following description should not be construed as limiting in any way the broad nature of this summary.

### BRIEF DESCRIPTION OF THE DRAWINGS

In order that the manner in which the above recited and other advantages and features of the invention are obtained, a more particular description of the invention briefly described above will be rendered by reference.

Notwithstanding any other forms that may fall within the scope of the present invention, preferred forms of the invention will now be described, by way of example only, with reference to the accompanying drawing in which:

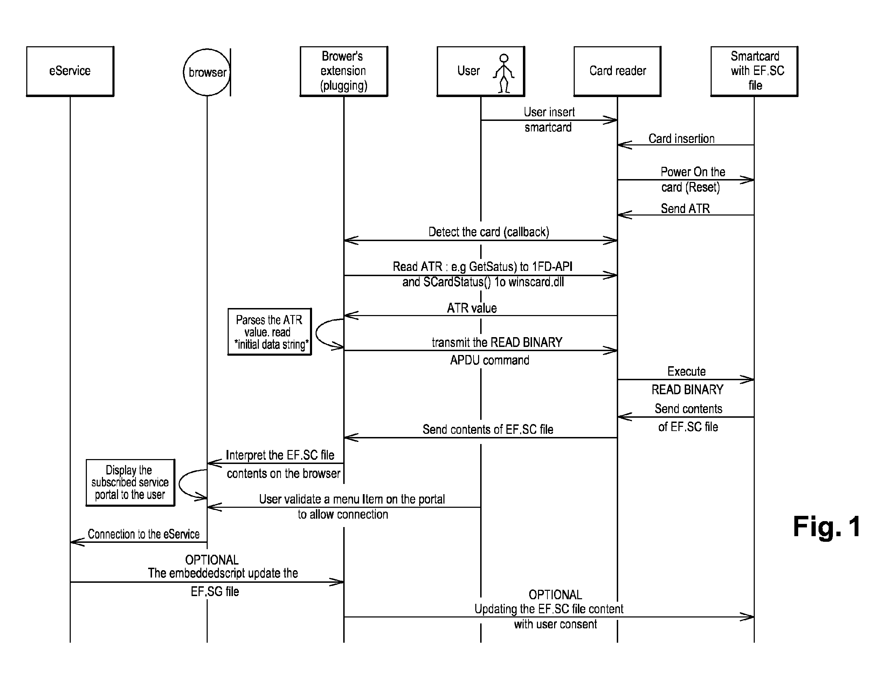

**FIG.1** schematically shows an embodiment of a method according to the invention, with a contact card.

### DETAILED DESCRIPTION OF THE PREFERRED EMBODIMENTS

The present invention may be understood according to the detailed description provided herein.

Shown in Fig.1 is a method wherein a user 1 gets connected to a remote server 6 from a browser 5 enabled with a browser's extension 2 or plug-in on a host device such as a computer, which is not represented here.

The web browser 5 loads an html page onto the user's device with the necessary script such as javascript to detect the local plug-in if it exists.

The user 1 starts the index HTML page to activate the browser's extension 2.

A page-embedded script checks through the browser's extension whether the user has inserted a data processing device 4 such as a smart card in a data processing device reader 3, such as a smart card reader 3, linked to the host device. In this embodiment, the smart card is a contact card.

When the smart card 4 is not inserted in the smart card reader 3, the page-embedded script requires the user to insert his card 4 in the reader 3. The user inserts his card 3 for example in a PCMCIA reader on a computer.

Upon insertion of the smart card 4 in the reader 3, the smart card 4 is detected and a related event is detected by the browser's extension 2.

According to the method of the invention, the browser's extension 2 reads either the smart card Answer To Reset (ATR) contents or the elementary file EF.ATR contents and parses it whereby detecting an "initial access data" according ISO/IEC 7816-4.

The interindustry data element called "initial access data" is referenced by a compact header in the historical bytes. The "initial access data" indicates a command APDU to be executed forcibly by smart card reader 3 before any other transaction.

The length of the initial access data may be for example of one byte meaning that the command APDU as specified in ISO/IEC 7816-4 §8.1.2, is a READ BINARY command that shall be executed with the parameters CLA=0x00, INS=0xB0, P1=0x00, P2=0x00 and Le=the SFI value, SFI being the short file identifier of the file to be read. The Le parameter is set to the first and only byte of initial access data.

The command APDU is the first command sent after the answer to reset.

The browser's extension 2 transmits the indicated APDU command to the card reader 3 which then executes the APDU command. The smart card 4 retrieves the targeted file and returns back the content of this file. In this embodiment, this targeted file is the elementary file "EF.SC" which contains XML formatted data with nested script such as javascript or JSON.

On receiving the data of the targeted file, the browser's extension 2 interprets these data on the browser 5.

The XML payload represents a static web portal with embedded script that executes at page onload and triggers the connection to a remote server offering a set of services for example by displaying a menu. The page onload is an event managed by the browser and used as a parameter to a javascript function. This event occurs at html page loading onto the browser.

The plug-in delivers the XML content to the browser that executes it and displays a resulting html page.

The call determining the Http request to a remote server is done by the browser's built-in object XMLHttpRequest.

When the page generated by the server supplying web pages embedding some appropriate script is loaded, the user selects an option of the menu in the default loaded portal whereby triggering an http request that is then handled by the embedded script and delivered to the browser's extension for transmission to the smart card 4.

In another embodiment, the script embedded on the incoming web pages provides instructions to the browser's extension 2 to update the file called "EF.SC". By doing so, the remote server 6 is able to change the user's accessibility to new services for example upon subscription.

When the file "EF.SC" is protected by security rules, these security conditions are fulfilled by the server before being allowed to overwrite the file contents.

In another embodiment, if the browser's extension is not installed, it can be downloaded it with the user's consent. The browser's extension 2 is for example customized for local browser along with a very small pack containing an HTML page representing the index page. Such a page does not exceed 1 or 2Kb . This page can be hosted in a dedicated folder created at the installation time which takes place once.

In another embodiment, the smart card is a contactless card and the reader is an adapted contactless reader. In this case the browser's extension 2 reads the smart card Answer To Select (ATS) content.

It will be understood that the remote server can be different from the server which provides the browser extension, i.e. the browser provider may be different from the browser's extension provider. The browser provider and the browser's extension can be installed at factory.

It will be well understood that these embodiments are not limited examples and a bookmark (URL indicator) can be used instead of XML formatted data. As well, instead of the XMLHttpRequest built-in object, any equivalent COM object complying with the interface definition language (IDL) supported by the browser may be used.

Thanks to this method, there is more ergonomy for web services access with non-USB and non-NFC cards.

The invention provides automatic default page loading for contact or contactless cards with cost-efficient method.

Thanks to the invention, a user can subscribe to a service accessible through a specific web portal, and can get automatically connected to the web portal upon insertion of his smartcard in the PCMCIA reader. The web portal bookmark (URL, http request) is personalized on his smartcard.

The bookmark can be updated depending on the result of the transaction, for instance in case the user subscribes to a new service or becomes eligible for a new service.

## Claims

1. Method for connecting to a remote server from a browser enabled with a browser's extension on a host device, wherein upon connection of a data processing device with a data processing device reader linked to the host device, the browser's extension receives data contained in a targeted file stored in said data processing device, said data being able to be interpreted by the browser so as to trigger a connection to the remote server and to display a subscribed service portal, said data being sent by the data processing device upon execution of a command transmitted by the browser's extension.

2. Method according to claim 1, wherein the browser's extension reads and parses an Answer To Reset or an Answer To Select content received from said data processing device so as to detect the command for retrieving the targeted file.

3. Method according to claim 1, wherein the browser's extension reads and parses a content out of an EF.ATR file received from said data processing device so as to detect the command for retrieving the targeted file.

4. Method according to claim 2 or 3, wherein the parsed content comprises an initial access data as specified in ISO/IEC 7816-4, said initial access data comprising data indicating said command.

5. Method according to claim 1 to 4, wherein the browser's extension transmits the command to the data processing device reader which in turn executes the command so as the data processing device sends the contents of the targeted file in return.

6. Method according to one of the previous claim, wherein it comprises using an APDU command.

7. Method according to claim 6, wherein the data processing device reader executes forcibly the ADPU command extracted from the ATR before any other transaction.

8. Method according to one of the previous claim, wherein it comprises using a smart card as data processing device.

9. Method according to one of the previous claim, wherein it comprised using an elementary file comprising XML formatted data as targeted file.

10. Method according to claim 1 to 8, wherein it comprises using an elementary file comprising a bookmark as targeted file.

11. Method according to one of the previous claim, wherein the browser's extension receives instructions for updating the data of the targeted file when the connection to the remote server is established.

12. Method according to claim 11, wherein the update of the data of the targeted file depends on security conditions.

13. Method according to one of the previous claims, wherein it uses contact card.

14. Method according to claim 1 to 12, wherein it uses contactless card.
